# EUROPÄISCHE PATENTSCHRIFT

(11) **EP 1 600 377 B1**
(45) Veröffentlichungstag und Bekanntmachung des Hinweises auf die Patenterteilung: **10.09.2008**
(21) Anmeldenummer: 05011380.2
(22) Anmeldetag: 25.05.2005
(51) Int. Cl.: B64D 41/00, B64D 11/02, H01M 8/00

(54) **Luftfahrzeug mit integriertem elektrochemischen Versorgungssystem**
Aircraft with integrated electrochemical supply system
Aéronef avec système electrochimique d'alimentation intégré

(30) Priorität: 28.05.2004 DE 102004026226; 03.08.2004 US 598456 P
(43) Veröffentlichungstag der Anmeldung: 30.11.2005
(73) Patentinhaber: Airbus Deutschland GmbH, 21129 Hamburg (DE)
(72) Erfinder: Hoffjann, Claus, 21629 Neu Wulmstorf (DE); Gründel, Harald, 22765 Hamburg (DE); Schuldzig, Hans-Georg, 21635 Jork (DE); Heinrich, Hans-Jürgen, 22609 Hamburg (DE)
(74) Vertreter: Maiwald Patentanwalts GmbH

(56) Entgegenhaltungen:
- EP-A- 1 357 625
- DE-A1- 10 229 309
- US-A1- 2002 058 175
- US-A1- 2003 207 164

## Beschreibung

Die vorliegende Erfindung betrifft ein Luftfahrzeug mit einem integrierten elektrochemischen Versorgungssystem. Insbesondere betrifft die vorliegende Erfindung ein Luftfahrzeug mit einem Versorgungssystem, umfassend einen ersten elektrochemischen Reaktor zur Erzeugung von Energie, Wasserstoff, Sauerstoff und Klarwasser.

In Luftfahrzeugen sind die einzelnen Versorgungssysteme, wie z. B. Systeme zur Energieerzeugung, zur Trinkwasserbereitstellung und Abwasserentsorgung, die Klimaanlage sowie Systeme zur Notfallversorgung der Passagiere mit Sauerstoff, vollständig voneinander getrennt. Insbesondere müssen die für den Betrieb oder die Versorgung der einzelnen Versorgungssysteme notwendigen Rohstoffe oder Treibstoffe in entsprechenden Vorratsbehältern mitgeführt werden. Diese Vorratsbehälter werden vor dem Flug aufgefüllt.

EP 1 357 625 A beschreibt ein Verfahren zur Effizienssteigerung und Verminderung von Abgasen bei Brennstoffzellensystemen. Bei einem Brennstoffzellensystem kann in Betrieb kathodenseitig Luft und anodenseitig Kohlenwasserstoff zugeführt werden, wobei durch Anreicherung der zugeführten Luft mit Sauerstoff die Effektivität der Verbrennung erhöht wird. Anodenseitig wird eine Reformierung von Kohlenwasserstoffen durchgeführt, deren Reaktionsgase getrennt und unterschiedlich weiterverwendet werden. Der Wasserstoff wird einer oder mehreren Brennstoffzellen zugeführt, das Wasser und der Kohlenwasserstoff werden auskondensiert und in den Reformerprozess zurückgeführt. Weiterhin werden Kohlendioxid und Kohlenmonoxid einem Abgaskatalysator zugeführt, wobei diese Gase in Kohlendioxid und molekularen Stickstoff gewandelt und an die Atmosphäre abgegeben werden.

Die notwendige Mitführung von Vorratsbehältern, wie beispielsweise Frischwassertanks oder Sauerstoffspeicher, erfordert umfangreichen Platzbedarf und führt zu einem erhöhten Fluggewicht. Weiterhin erfordert der Beladevorgang ein erhebliches Maß an Zeitaufwand und es ist in der Regel erforderlich, dass zur Beladung entsprechende Spezialmaschinen oder -instrumente verwendet werden.

Vor diesem Hintergrund ist es Aufgabe der vorliegenden Erfindung, ein verbessertes Versorgungssystem für Luftfahrzeuge anzugeben.

Gemäß einem Ausführungsbeispiel der vorliegenden Erfindung, wie in Anspruch 1 angegeben, wird die obige Aufgabe mittels eines Versorgungssystems in einem Luftfahrzeug gelöst, welches einen ersten elektrochemischen Reaktor zur Erzeugung von Energie, Wasserstoff, Sauerstoff und Klarwasser aus Grauwasser, einen kohlenwasserstoffhaltigen Brennstoff und Luft umfasst. Hierbei ersetzt oder unterstützt der erste elektrochemische Reaktor zumindest eines der Systeme des Luftfahrzeugs, ausgewählt aus der Gruppe bestehend aus Hilfstriebwerk zur Erzeugung von Druckluft und elektrischer Energie, Stauluftturbine, Klarwassertank eines Wassersystems, Triebwerksgenerator zur Erzeugung elektrischer Energie und Sauerstoffversorgungssystem.

Vorteilhafterweise ist hierdurch ein Versorgungssystem für Luftfahrzeuge angegeben, welches die bisher getrennten Systeme zur Frischwasserversorgung, Energieerzeugung und Sauerstofferzeugung zu einem Gesamtsystem zusammenfasst. Das erfindungsgemäße Versorgungssystem erzeugt hierbei vorteilhafterweise elektrische Energie, Wärmeenergie (welche beispielsweise innerhalb des Versorgungssystems selbst weiterverwendet wird), Wasserstoff, Sauerstoff und Klarwasser, wodurch die Mitführung dieser Ressourcen verringert werden oder gar gänzlich entfallen kann.

Vorteilhafterweise ist das im Luftfahrzeug entstehende Abwasser nach einer entsprechenden Aufreinigung oder Entsalzung dem Versorgungssystem wieder zuführbar, wonach es im elektrochemischen Reaktor in die Bestandteile Wasserstoff und Sauerstoff aufspaltbar ist. Aus dem erzeugten Wasserstoff und Sauerstoff ist dann zum Beispiel, insbesondere bei der Verwendung mehrerer elektrochemischer Reaktoren, Wasser herstellbar. Somit ist der Wasserkreis innerhalb des Luftfahrzeuges geschlossen.

Gemäß einem weiteren Ausführungsbeispiel der vorliegenden Erfindung, wie in Anspruch 2 angegeben, umfasst das Versorgungssystem weiterhin eine Steuerungseinheit zur Steuerung oder Regelung der im Reaktor ablaufenden Prozesse, wobei die im Reaktor ablaufenden chemischen oder elektrochemischen Prozesse als Gesamtprozess ablaufen und nicht voneinander trennbar sind.

Somit wird durch die Verknüpfung der im Reaktor ablaufenden verschiedenen chemischen oder elektrochemischen Prozesse zu einem Gesamtprozess ein abgeschlossenes Versorgungssystem bereitgestellt, bei welchem die intern ablaufenden Prozesse vorteilhafterweise derart miteinander verknüpft sind, dass eine optimale Energieausbeute gewährleistet ist. So kann beispielsweise die bei einem Brennstoffzellenprozess auftretende Prozesswärme zum Verdampfen des eingangsseitig zugeführten kohlenwasserstoffhaltigen Brennstoffs verwendet werden.

Gemäß einem weiteren Ausführungsbeispiel der vorliegenden Erfindung, wie in Anspruch 3 angegeben, umfasst das Versorgungssystem weiterhin einen zweiten elektrochemischen Reaktor, wobei die Steuerungseinheit den ersten und den zweiten Reaktor einzeln steuert oder regelt, so dass der erste und der zweite Reaktor unabhängig voneinander betreibbar sind.

Beispielsweise besteht das Versorgungssystem aus mindestens zwei Reaktoren. Jeder Reaktor wird von einer eigenen Steuerung gesteuert oder geregelt, welche zu der Steuerungseinheit zusammengefasst sind. Vorzugsweise kommunizieren die Steuerungen miteinander, so dass bei Ausfall eines Reaktors die übrigen Reaktoren diesen ersetzen.

Vorteilhafterweise wird dadurch eine Redundanz in der Versorgung des Luftfahrzeuges mit Energie, Wasserstoff, Sauerstoff und Klarwasser sichergestellt. Bei Ausfall eines Reaktors, sei es durch Defekt oder z. B. auch aufgrund von Wartungsarbeiten, übernimmt der andere Reaktor dessen Aufgaben. Weiterhin ist es möglich, durch Zusammenschalten mehrerer unabhängiger Reaktoren Leistungsspitzen, die während des Flugbetriebes auftreten können, abzudecken.

Gemäß einem weiteren Ausführungsbeispiel der vorliegenden Erfindung, wie in Anspruch 4 angegeben, umfasst das Versorgungssystem weiterhin eine Trinkwassernutzungsanlage, insbesondere mindestens eine Waschrauminstallation, WC-Spülung, Fäkalientransportvorrichtung oder Fäkaliensammelvorrichtung, wobei die Trinkwassemutzungsanlage eine Auffangvorrichtung zum Sammeln anfallender Abwässer umfasst.

Das in der Trinkwassemutzungsanlage anfallende Abwasser kann somit vorteilhafter Weise gesammelt und, nach einem entsprechenden Vorreinigungs- oder Entsalzungsprozess, dem elektrochemischen Reaktor zugeführt werden, beispielsweise zur Erzeugung von Wasserstoff, Sauerstoff oder Klarwasser. Vorteilhafterweise ist somit der Wasserkreislauf innerhalb des Luftfahrzeuges vollständig geschlossen.

Gemäß einem weiteren vorteilhaften Ausführungsbeispiel der vorliegenden Erfindung, wie in Anspruch 5 angegeben, ist dem ersten oder zweiten Reaktor mindestens eine Kondensationseinheit zur Auskondensation von Wasseranteilen aus einem Abgas des ersten oder zweiten Reaktors nachgeschaltet.

Durch die Verwendung einer Kondensationseinheit ist erfindungsgemäß gewährleistet, dass ein hoher Anteil des sich in den Abgasen der Reaktoren befindenden Wassers aus diesen Abgasen entfernt wird und somit dem Versorgungssystem erneut zugeführt werden kann.

Weitere vorteilhafte Ausführungsbeispiele der vorliegenden Erfindung sind in Ansprüchen 6 und 7 angegeben.

Ferner könnten theoretisch in dem ersten oder zweiten Reaktor die ablaufenden Prozesse derart regelbar sein, dass sich eine Kombination aus erstem oder zweiten Reaktor zu ihrer Umgebung thermisch theoretisch neutral verhält, so dass eine einfache Isolierung der Kombination für den Einbau in das Luft- oder Raumfahrzeug ausreichend sein könnte.

Daraus könnte theoretisch eine thermische Ausgewogenheit im Wesentlichen durch konstruktive Maßnahmen bestimmt werden. Die Regelparameter innerhalb des Systems würden einmal eingestellt und folgen dann von Außen vorgegebenen Parametern. Es gibt also theoretisch immer ein thermisches Gleichgewicht innerhalb des Systems. Einzige Ausnahmen sind die Anwärm- und die Ausklingphase. Beim Anwärmen muss durch einen gesonderten Prozess Wärme zugeführt werden (Brenner, elektrische Beheizung). Beim Abklingen werden die Prozesse einfach unterbrochen. Es findet keine weitere Stoffumsetzung statt und das System kühlt aus.

Gemäß einem weiteren Ausführungsbeispiel der vorliegenden Erfindung umfasst das Versorgungssystem weiterhin zumindest eine Turbine oder zumindest eine Pumpe, wobei die zumindest eine Turbine oder Pumpe zum Transport eines vom ersten oder zweiten Reaktor ausgehenden Ausgangs-Stoffstroms oder zum Pumpen eines dem ersten oder zweiten Reaktor zugeführten Eingangs-Stoffstroms ausgeführt ist.

Durch die zumindest eine Pumpe oder Turbine ist es somit möglich, einen entsprechenden Ladedruck des Eingangs-Stoffstroms zu erzeugen bzw. die Einströmgeschwindigkeit des Eingangs-Stoffstroms zu erhöhen und somit dem aktuellen Versorgungsbedarf anzupassen. Weiterhin ist durch die Pumpe oder Turbine die Abtransportgeschwindigkeit entsprechender Ausgangs-Stoffströme regelbar bzw. kann hierdurch ein erhöhter Druck im Leitungssystem des Ausgangs-Stoffstroms erzeugt werden, so dass der Ausgangs-Stoffstrom beispielsweise unter erhöhtem Druck komprimiert in einem entsprechenden Behälter gelagert bzw. zwischengelagert werden kann.

Gemäß einem weiteren vorteilhaften Ausführungsbeispiel der vorliegenden Erfindung umfasst das Versorgungssystem weiterhin eine gasdichte Umhausung für alle sicherheitskritischen Systemkomponenten.

Vorteilhafterweise ist hierdurch sichergestellt, dass austretende Schadstoffe nicht in die Fluggastzelle des Luftfahrzeuges gelangen können.

Gemäß einer weiteren beispielhaften Ausführungsform der vorliegenden Erfindung umfasst das Versorgungssystem weiterhin eine Temperierungsvorrichtung zur Einstellung einer Temperatur innerhalb der gasdichten Umhausung und eine Druckbeaufschlagungsvorrichtung zur Beaufschlagung eines Drucks durch ein inertes Gas innerhalb der gasdichten Umhausung unabhängig vom Druck außerhalb der gasdichten Umhausung.

Somit ist, vom thermodynamischen Standpunkt aus betrachtet, das Versorgungssystem unabhängig von den Bedingungen innerhalb des Flugzeugrumpfes. Sowohl Temperatur als auch Druck innerhalb der gasdichten Umhausung des Versorgungssystems können gesondert geregelt werden, um optimale Prozessbedingungen zu gewährleisten.

Im Folgenden werden mit Verweis auf die Figuren bevorzugte Ausführungsbeispiele der vorliegenden Erfindung beschrieben.
- Fig. 1: zeigt eine schematische Darstellung eines Versorgungssystems gemäß einem bevorzugten Ausführungsbeispiel der vorliegenden Erfindung.
- Fig. 2: zeigt die insgesamt im Versorgungssystem ablaufenden chemischen oder elektrochemischen Prozesse und die Nutzung der erzeugten Reaktionsprodukte.

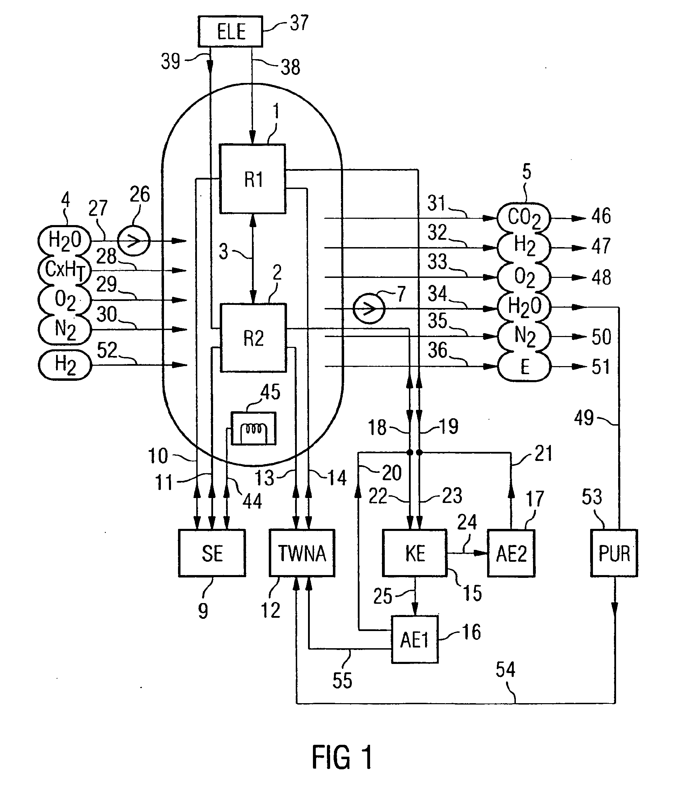

Fig. 1 zeigt ein Versorgungssystem für ein Luftfahrzeug gemäß einem Ausführungsbeispiel der vorliegenden Erfindung. Durch Installation eines oder mehrerer elektrochemischer Reaktoren, wie beispielsweise einem ersten elektrochemischen Reaktor 1 und einem zweiten elektrochemischen Reaktor 2, welche als Eingangsstoffe ausreichend aufgereinigtes Grauwasser, einen kohlenwasserstoffhaltigen Energieträger, wie beispielsweise Kerosin, sowie Luftsauerstoff nutzen und als Ausgangsstoffe Frischwasser, Sauerstoff sowie elektrische Energie erzeugen, lässt sich ein Versorgungssystem für ein Luftfahrzeug mit veränderter Systemkonzeption gegenüber den heute üblichen Versorgungssystemen darstellen.

In dem in Fig. 1 dargestellten Versorgungssystem sind mehrere Reaktoren der gleichen Art (hier beispielhaft erster Reaktor 1 und zweiter Reaktor 2) installiert, welche die bisher getrennten Systeme zur Frischwasserversorgung, Energieerzeugung und Sauerstofferzeugung zu einem Gesamtsystem zusammenfassen. Die notwendigen Redundanzen werden dabei durch zwei oder mehrere Systeme oder Reaktoren gleicher Art gewährleistet, die vollständig unabhängig voneinander betrieben werden können.

Die beiden elektrochemischen Reaktoren ersetzen dabei ganz oder teilweise folgende heute verwendeten Systeme und Komponenten: Triebwerksgeneratoren zur Erzeugung elektrischer Energie, Hilfstriebwerke zur Erzeugung von Druckluft und elektrischer Energie, Stauluftturbinen, Frischwassertanks oder Sauerstoffversorgungssysteme.

### Jeder elektrochemische Reaktor hat dabei folgende Wirkungsweise:

Einerseits wird aufgereinigtes Grauwasser in Wasserstoff und Sauerstoff aufgespalten, andererseits wird aus einem kohlenwasserstoffhaltigen Energieträger, wie beispielsweise Kerosin, Wasserstoff gewonnen und weiterhin werden Wasserstoff und Sauerstoff zu Wasser unter Erzeugung von elektrischer Energie synthetisiert.

### Hierbei gilt die folgende vereinfachte Reaktionsgleichung: CxHy + aH₂O + bO₂ +cN₂ → eH₂ +fO₂ +gH₂O +cN₂ +Energie.

Hierbei gelten die folgenden Randbedingungen:
- die im Reaktor stattfindenden Prozesse funktionieren als Gesamtprozess und sind nicht voneinander getrennt zu betreiben;
- die Stickstoff-, Kohlendioxyd- und Spurengasanteile aus der Kabinenluft werden durch das System durchgeleitet oder spielen beim Umsetzungsprozess nur eine untergeordnete Rolle;
- die eingangsseitigen Moleküle und Verbindungen sind im Wesentlichen nicht identisch mit den ausgangsseitigen Molekülen und Verbindungen;
- die Eingangs-Stoffströme bestehen aus aufgereinigtem Grauwasser, Luft (Kabinenluft) und einem kohlenwasserstoffhaltigen Brennstoff (z. B. Kerosin);
- die Ausgangs-Stoffströme bestehen aus Wasser, Sauerstoff und Kohlendioxyd, im Falle zusätzlicher extern angeschlossener Brennstoffzellen wird auch Wasserstoff ausgeleitet;
- im Prozess freiwerdende andere Gase werden intern derart geleitet und umgesetzt, dass ausschließlich die oben angegebenen Stoffströme außerhalb des Reaktors auftreten;
- der Reaktor verhält sich zu seiner Umgebung thermisch neutral, so dass eine einfache Isolierung ausreicht, um einen Einbau in die Flugstruktur zu ermöglichen;
- die vom Reaktor abgegebene elektrische Energie liegt in ihrem Ursprung als Gleichspannung vor.

Im Folgenden werden das erfindungsgemäße Versorgungssystem und die damit zusammenhängenden Stoffströme näher beschrieben.

Das Versorgungssystem besteht aus einem ersten elektrochemischen Reaktor 1 und einem zweiten elektrochemischen Reaktor 2, welche miteinander über ein Leitungssystem 3 verbunden sind. Über das Leitungssystem 3 sind sowohl Rohstoffe, wie beispielsweise Sauerstoff, Wasserstoff oder Wasser, als auch Wärmeenergie oder elektrische Energie austauschbar. Die wesentlichen Bestandteile bzw. die sicherheitsrelevanten Bestandteile, wie beispielsweise die Reaktoren 1 und 2, sind innerhalb einer thermisch isolierten und gasdichten Umhausung 6 angeordnet.

Über Leitungssysteme 27, 28, 29, 30 und 52 werden den elektrochemischen Reaktoren 1, 2 Eingangsstoffe 4 bereitgestellt. Die Eingangsstoffe 4 umfassen Grauwasser (H₂O), einen kohlenwasserstoffhaltigen Brennstoff (CxHy), Luftsauerstoff (O₂), Luftstickstoff (N₂) und Wasserstoff (H₂). Der eingangsseitige Wasserstoff entstammt beispielsweise Leitungssystemen mit Wasserstoffspeicher 47, welcher über Leitungssystem 32 vom Versorgungssystem selber gespeist wird.

Ausgehend von den elektrochemischen Reaktoren 1, 2 erhält man ein System, welches sich in einem Luftfahrzeug wie folgt anordnen lässt:

Das aus einer Trinkwassernutzungsanlage 12, welche beispielsweise WC-, Waschbecken, Galleys oder andere Wasserverbraucher umfasst, gewonnenes Abwasser wird durch Aufreinigung und Entsalzung in ein für den Reaktor geeignetes Wasser umgewandelt. Dieses so gewonnene Wasser wird dem ersten Reaktor 1 über Leitungssystem 14 oder dem zweiten Reaktor 2 über Leitungssystem 13 zugeführt. Das Wasser wird daraufhin im Reaktor in die Bestandteile Wasserstoff und Sauerstoff aufgespalten. Weiterhin ist es möglich, über die Leitungssysteme 13, 14 von einem der Reaktoren 1, 2 ausgegebenes Wasser der Trinkwassernutzungsanlage 12 zuzuführen. Hierfür kann es unter Umständen erforderlich sein, dass ein Kondensator (15) zwischengeschaltet wird, so dass das Wasser aus seiner gasförmigen Phase kondensiert und von evtl. vorhandenen zusätzlichen gasförmigen Bestandteilen, wie beispielsweise Kohlendioxid, Wasserstoff oder Sauerstoff, abgetrennt wird.

Der in den Reaktoren gewonnene Sauerstoff wird über Leitungssystem 33 von den Reaktoren 1, 2 abgeführt und kann daraufhin über Leitungssystem 48 zur Notfallversorgung von Passagieren bei Druckabfall in der Kabine verwendet werden bzw. im Normalbetrieb, beispielsweise über Leitungssystem 48, einem Klimasystem, welches auf dem Prinzip der Luftregeneration beruht (nicht gezeigt in Fig. 1) zugeführt werden. Ein Sauerstoffspeicher ist somit nicht erforderlich. Der Notfall-Sauerstoff wird sozusagen "online" bereitgestellt.

Weiterhin ist es denkbar, gemäß einem Ausführungsbeispiel der vorliegenden Erfindung, den Sauerstoff in einem Brennstoffzellenprozess zur Leistungssteigerung einer Brennstoffzelle oder wieder einem der Reaktoren 1 oder 2 über Leitungssystem 29 zuzuführen.

Der intern im Reaktor gewonnene Wasserstoff aus einem Wasseraufspaltungsprozess kann beispielsweise zusammen mit dem Wasserstoff aus einer im Reaktor ebenfalls vorhandenen Aufbereitung von Kohlenwasserstoffen (direkter Reformerprozess) einer weiteren Verarbeitungsstufe zugeführt werden. Hier wird dieser wieder mit Luftsauerstoff zu Wasser umgesetzt und auskondensiert. Dieses Wasser kann beispielsweise über Leitungssystem 49 einer nachgeschalteten Aufbereitungseinheit 53 zugeführt werden und dort von allen unerwünschten Inhaltsstoffen befreit werden (Purifikation). Danach erfolgt beispielsweise eine Aufbereitung zu Trinkwasser, beispielsweise in Form einer Mineralisierung. Dieses

Trinkwasser wird dann den oben genannten Wasserverbrauchern der Trinkwassernutzungsanlage 12 (z. B. Waschbecken, Galleys, WC-Spülungen usw.) zugeführt.

Der Wasserkreislauf ist nach der Aufbereitung des Grauwassers und der Rückführung zu den Reaktoren geschlossen.

Neben Kohlendioxyd (CO₂), Wasserstoff (H₂), Sauerstoff (O₂), Wasser (H₂O), Stickstoff (N₂) zählt auch Energie zu den im Reaktor gewonnenen Ausgangsstoffen 5. Bei der Energie handelt es sich zum einen um thermische Energie, welche den Reaktor im Wesentlichen nicht verlässt, sondern vielmehr eingesetzt wird, um beispielsweise Wasser oder Kerosin zu verdampfen. Die im Reaktor gewonnene elektrische Energie kann beispielsweise in das Bordnetz des Luftfahrzeuges eingespeist werden, wie durch Leitungssystem 51 angedeutet. Auch ist es aber denkbar, dass die vom Reaktor gewonnene elektrische Energie in entsprechenden Akkumulatoren zwischengespeichert wird, um zu einem späteren Zeitpunkt, beispielsweise für einen Startvorgang der Reaktoren, verwendet zu werden.

Um die in einem Luftfahrzeug notwendig Redundanz zu erlangen, sind, gemäß des in Fig. 1 abgebildeten Ausführungsbeispiels, mindestens zwei voneinander unabhängig arbeitende elektrochemische Reaktoren 1, 2 vorgesehen. Hierbei liefern alle Reaktoren zusammen die benötigte elektrische Energie für Spitzenauslastungen des elektrischen Systems, die benötigte maximale Wassermenge und setzen die maximal anfallende Grauwassermenge um.

Den für die Luftgenerierung notwendigen Sauerstoffanteil stellt einer der Reaktoren alleine zur Verfügung. Überschüssige Sauerstoffmengen werden in den Reaktoren selbst wieder umgesetzt und ergänzen den Sauerstoffanteil der zugeführten Kabinenluft.

Ein Reaktor alleine in der Lage, die benötigte Sauerstoffinenge für den Notfall, z. B. bei Abfall des Kabinendrucks durch eine Leckage in der Druckkabine, über unbestimmte Zeit zu liefern. Dies wird auch unter den Bedingungen des bei Druckabfall geringeren Vordrucks der zur Verfügung stehenden Luft auf diesen Reaktor gewährleistet.

Der durch einen Reaktor geleitete Stickstoff aus der Luft wird über Leitungssysteme 35, 50 abgeführt. Ebenso wird das vom Reaktor ausgegebene Kohlendioxyd über Leitungssysteme 31, 46 abgeführt.

In einer beispielhaften Ausführungsform der vorliegenden Erfindung ist eine Pumpe oder Turbine 7 in Leitungssystem 34 vorgesehen, über welche der vom Reaktor abgeführte Wasserdampf abgepumpt oder verdichtet werden kann. Natürlich können derartige Pumpen oder Turbinen auch in anderen Leitungssystemen, wie beispielsweise in Leitungssystem 33, oder aber auch im wasserzuführenden Leitungssystem 27 in Form von Pumpe oder Turbine 26 eingebaut sein.

Gemäß einem bevorzugten Ausführungsbeispiel der vorliegenden Erfindung ist eine Steuereinheit 9 vorgesehen, welche die im Reaktor ablaufenden Prozesse steuert oder regelt. Beispielsweise können somit über Steuerleitungssysteme 10 und 11 die beiden Reaktoren 1 und 2 einzeln und unabhängig voneinander angesteuert oder geregelt werden, so dass der erste und der zweite Reaktor unabhängig voneinander betreibbar sind.

Gemäß einem Ausführungsbeispiel der vorliegenden Erfindung ist es denkbar, dem ersten und zweiten Reaktor 1, 2 über Leitungssysteme 19, 18, 23, 22 eine Kondensationseinheit 15 zur Auskondensation von Wasseranteilen aus einem Abgas des ersten Reaktors 1 oder zweiten Reaktors 2 nachzuschalten. Der Kondensationseinheit 15 kann beispielsweise über Leitungssysteme 24, 25 eine erste Aufbereitungseinheit 16 zur Aufbereitung des erzeugten Klarwassers zu Trinkwasser und eine zweite Aufbereitungseinheit 17 zur Aufbereitung von Abwasser zu Wasser, welches zur Versorgung des ersten oder zweiten Reaktors 1, 2 verwendbar ist, nachgeschaltet werden. Das in Aufbereitungseinheit 16 erzeugte Trinkwasser kann über Leitungssystem 20 und Leitungssystem 18 dem Reaktor rückgeführt werden oder aber auch über Leitungssystem 55 der Trinkwassernutzungsanlage zugeführt werden. Weiterhin kann das in Aufbereitungseinheit 17 erzeugte Wasser zur Versorgung des ersten oder zweiten Reaktors über Leitungssystem 21 und Leitungssystem 19 dem ersten Reaktor zurückgeführt werden. Natürlich ist hier erfindungsgemäß aber auch eine Rückführung zum zweiten Reaktor denkbar.

Weiterhin kann eine externe elektrische Energiequelle 37 vorgesehen sein, welche über Leitungssystem 38 dem ersten Reaktor 1 elektrische Energie zuleitet und welche den zweiten Reaktor 2 über Leitungssystem 39 mit elektrischem Strom versorgt. So könnte es z.B. bei elektrischen Energieüberschüssen an anderer Stelle sinnvoll sein, diese elektrische Energie zur Unterstützung der Reaktoren bei der Wasseraufspaltung einzusetzen um deren Leistungsfähigkeit zu erhöhen.

Der kohlenwasserstoffhaltige Brennstoff CxHy und das evtl. von extern zuzuführende Klarwasser werden beispielsweise über entsprechende Versorgungseinrichtungen (nicht gezeigt in Fig. 1) dem Reaktor zugeführt.

Für den Fall einer Leckage im Tanksystem des Luftfahrzeugs müssen bei Treibstoffmangel oder Triebwerksausfall die Reaktoren noch bis zur Landung ausreichend elektrische Energie und Sauerstoff liefern. Hierzu wird beispielsweise ein Hydridspeicher mit einer bestimmten Menge gespeicherten Wasserstoffs eingesetzt. Alternativ hierzu kann auch ein Feststoffspeicher eingesetzt werden, dessen Inhalt unter der Zuführung von Wasser Wasserstoff freisetzt. Ein geeignetes Verfahren besteht in der Umsetzung von NatriumBorhydrid und Wasser aus dem Grauwasserbereich in Natrium-Boroxid und Wasserstoff. In diesem Fall werden alle elektrischen Verbraucher und die Sauerstoffversorgung auf das Mindestmaß dessen heruntergefahren, welches für den reinen Notbedarf nötig ist.

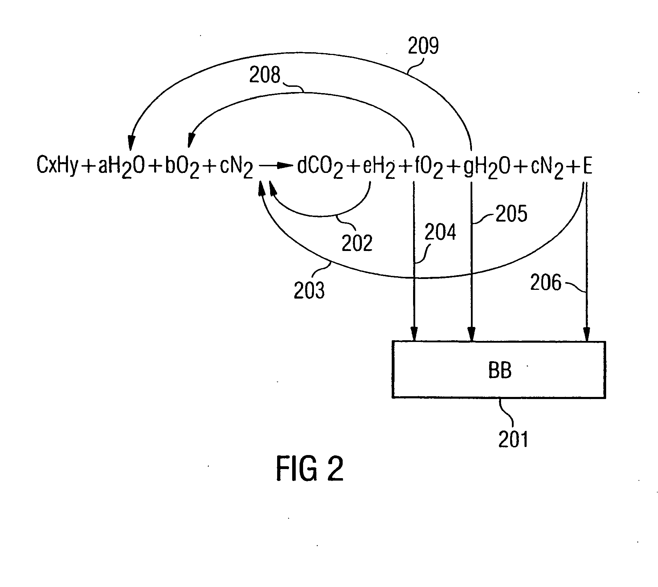

Fig. 2 zeigt den Gesamtprozess der elektrochemischen oder chemischen Prozesse, welche im Versorgungssystem ablaufen, und die entsprechende Nutzung der Reaktionsprodukte. In den elektrochemischen Reaktoren 1, 2 werden ein kohlenwasserstoffhaltiger Brennstoff CxHy, a Anteile Wasser, b Anteile Sauerstoff, c Anteile Stickstoff zu d Anteile Kohlendioxid, e Anteile Wasserstoff, f Anteile Sauerstoff, g Anteile Klarwasser, c Anteile Stickstoff und Energie umgesetzt.

Bei der erzeugten Energie handelt es sich um elektrische Energie, welche einerseits über Leitungen 201 für den Bordbetrieb 201 genutzt werden kann oder aber auch dem elektrochemischen Reaktor über Stromführung 203 zugeführt werden kann.

Das im Prozess erzeugte Wasser kann erfindungsgemäß einerseits dem Prozess erneut zugeführt werden 209 oder aber auch für die Nutzung im Bordbetrieb 205 Anwendung finden.

Der im Prozess erzeugte Sauerstoff findet entweder für die Nutzung im Bordbetrieb Anwendung 204 oder aber er wird einem nachgeschalteten Verbrennungsprozess oder beispielsweise auch einer PEM-Brennstoffzelle (nicht dargestellt in Fig. 2) zugeführt. Weiterhin kann der erzeugte Sauerstoff der Erhöhung des Umsatzes eines der elektrochemischen Reaktoren 1, 2 dienen, wie durch Bezugszeichen 208 symbolisiert.

Weiterhin kann der erzeugte Wasserstoff zur Erhöhung des Umsatzes der Reaktoren verwendet werden oder aber auch einem nachgeschalteten Verbrennungsprozess zugeführt werden.

Die Erfindung beschränkt sich in ihrer Ausführung nicht auf die in den Figuren dargestellten beispielhaften Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch machen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Luftfahrzeug, umfassend ein Versorgungssystem mit einem ersten elektrochemischen Reaktor (1) zur Erzeugung von Energie, Wasserstoff, Sauerstoff und Klarwasser aus Grauwasser, einem kohlenwasserstoffhaltigen Brennstoff und Luft,
wobei der erste elektrochemische Reaktor (1) zumindest eines der Systeme des Luftfahrzeugs ausgewählt aus der Gruppe bestehend aus Hilfstriebwerk zur Erzeugung von Druckluft und elektrischer Energie, Stauluftturbine, Klarwassertank eines Wassersystems, Triebwerksgenerator zur Erzeugung elektrischer Energie und Sauerstoffversorgungssystem zumindest teilweise ausbildet.

2. Luftfahrzeug mit einem Versorgungssystem nach Anspruch 1, weiterhin umfassend eine Steuerungseinheit (9) zur Steuerung oder Regelung der im Reaktor ablaufenden Prozesse,
wobei die im Reaktor ablaufenden chemischen oder elektrochemischen Prozesse als Gesamtprozess ablaufen und nicht voneinander trennbar sind.

3. Luftfahrzeug mit einem Versorgungssystem nach Anspruch 1 oder 2, weiterhin umfassend einen zweiten elektrochemischen Reaktor (2);
wobei die Steuerungseinheit (9) den ersten und den zweiten Reaktor (1, 2) einzeln steuert oder regelt, so dass der erste und der zweite Reaktor (1, 2) unabhängig voneinander betreibbar sind.

4. Luftfahrzeug mit einem Versorgungssystem nach einem der vorhergehenden Ansprüche, weiterhin umfassend:
eine Trinkwassernutzungsanlage (12), insbesondere mindestens eine Waschrauminstallation, WC-Spülung, Fäkalientransportvorrichtung oder Fäkaliensammelvorrichtung;
wobei die Trinkwassernutzungsanlage (12) eine Auffangvorrichtung zum Sammeln anfallender Abwässer umfasst.

5. Luftfahrzeug mit einem Versorgungssystem nach einem der vorhergehenden Ansprüche,
wobei dem ersten oder zweiten Reaktor (1, 2) mindestens eine Kondensationseinheit (15) zur Auskondensation von Wasseranteilen aus einem Abgas des ersten oder zweiten Reaktors (1, 2) nachgeschaltet ist.

6. Luftfahrzeug mit einem Versorgungssystem nach Anspruch 5,
wobei der Kondensationseinheit mindestens eine erste Aufbereitungseinheit zur Aufbereitung des erzeugten Klarwassers zu Trinkwasser oder eine zweite Aufbereitungseinheit zur Aufbereitung von Abwasser zu Wasser, welches zur Versorgung des ersten oder zweiten Reaktors (1, 2) verwendbar ist, nachgeschaltet ist.

7. Luftfahrzeug mit einem Versorgungssystem nach einem der vorhergehenden Ansprüche,
wobei die im ersten oder zweiten Reaktor (1, 2) erzeugte Energie zumindest teilweise als elektrische Energie in Form einer Gleichspannung am ersten oder zweiten Reaktor (1, 2) vorliegt.

8. Luftfahrzeug mit einem Versorgungssystem nach einem der vorhergehenden Ansprüche, weiterhin umfassend:
zumindest eine Turbine oder zumindest eine Pumpe;
wobei die zumindest eine Turbine oder Pumpe (26) zum Transport eines vom ersten oder zweiten Reaktor (1, 2) ausgehenden Ausgangs-Stoffstroms oder zum Pumpen eines dem ersten oder zweiten Reaktor (1, 2) zugeführten Eingangs-Stoffstroms ausgeführt ist.

9. Luftfahrzeug mit einem Versorgungssystem nach einem der vorhergehenden Ansprüche, weiterhin umfassend:
zumindest eine Versorgungsvorrichtung ausgewählt aus der Gruppe bestehend aus:
eine erste Versorgungsvorrichtung für den zuzuführenden kohlenwasserstoffhaltigen Brennstoff;
eine zweite Versorgungsvorrichtung für extern zuzuführendes Klarwasser; und
eine dritte Versorgungsvorrichtung für zuzuführende elektrische Energie aus dem Bordnetz oder eine externe Energiequelle oder eine separat betriebenen Brennstoffzelle.

10. Luftfahrzeug mit einem Versorgungssystem nach einem der vorhergehenden Ansprüche, weiterhin umfassend:
eine gasdichte Umhausung für alle sicherheitskritischen Systemkomponenten.

11. Luftfahrzeug mit einem Versorgungssystem nach Anspruch 10, weiterhin umfassend:
eine Temperierungsvorrichtung zur Einstellung einer Temperatur innerhalb der gasdichten Umhausung; und
eine Druckbeaufschlagungsvorrichtung zur Beaufschlagung eines Drucks durch ein inertes Gas innerhalb der gasdichten Umhausung unabhängig vom Druck außerhalb der gasdichten Umhausung.

12. Luftfahrzeug mit einem Versorgungssystem nach einem der vorhergehenden Ansprüche, weiterhin umfassend:
einen ersten Wasserstoffspeicher zur Bereitstellung von Wasserstoff für den ersten oder zweiten Reaktor (1, 2); und
einen zweiten Wasserstoffspeicher zur Speicherung von im ersten oder zweiten Reaktor (1,2) erzeugten Wasserstoff.

## Claims

1. Aircraft comprising a supply system with a first electrochemical reactor (1) for generating energy, hydrogen, oxygen and clear water from grey water, a hydrocarbon-containing fuel and air,
wherein the first electrochemical reactor (1) at least partly forms at least one of the systems of the aircraft selected from the group consisting of auxiliary power unit for generating compressed air and electrical energy, ram-air turbine, clear water tank of a water system, power unit generator for generating electrical energy and oxygen supply system.

2. Aircraft with a supply system according to claim 1 further comprising a control unit (9) for controlling or regulating the processes occurring within the reactor,
wherein the chemical or electrochemical processes occurring within the reactor take place as a complete process and cannot be separated from each other.

3. Aircraft with a supply system according to claim 1 or 2, further comprising a second electrochemical reactor (2),
wherein the control unit (9) control or regulates the first and the second reactor (1, 2) individually so that the first and the second reactor (1, 2) can be operated independently of each other.

4. Aircraft with a supply system according to any one of the preceding claims, further comprising:
a potable water utilisation facility (12), in particular at least one washroom installation, toilet flushing, excrement transport device or excrement collecting device,
wherein the potable water utilisation facility (12) comprises a collecting device for the collection of the waste water that occurs.

5. Aircraft with a supply system according to any one of the preceding claims,
wherein downstream of the first or second reactor (1, 2) there is at least one condenser unit (15) which may used for condensing water portions from an exhaust waste gas from the first or second reactor (1, 2).

6. Aircraft with a supply system according to claim 5,
wherein downstream of the condenser unit there is at least a first conditioning unit for treating the clear water produced or a second conditioning unit for conditioning waste water to water suitable for supplying the first or second reactor (1, 2).

7. Aircraft with a supply system according to any one of the preceding claims,
wherein the energy generated in the first or second reactor (1, 2) is at least partially present as electrical energy in the form of DC voltage at the first or second reactor (1, 2)

8. Aircraft with a supply system according to any one of the preceding claims, further comprising:
at least one turbine or at least one pump, wherein the at least one turbine or pump (26) is designed to transport an outgoing material flow from the first or second reactor (1, 2) or to pump an ingoing material flow supplied to the first or second reactor (1, 2).

9. Aircraft with a supply system according to any one of the preceding claims, further comprising:
at least one supply device selected from the group consisting of:
a first supply device for the hydrocarbon-containing fuel to be supplied,
a second supply system for clear water to be supplied externally and
a third supply system electrical energy to be supplied from the aircraft electrical system or an external source of energy or a separately operated fuel cell.

10. Aircraft with a supply system according to any one of the preceding claims, further comprising:
a gas-tight housing for all system components critical with regard to safety.

11. Aircraft with a supply system according to claim 10, further comprising:
a temperature control unit for setting the temperature within the gas-tight housing and
a pressure-applying device for applying a pressure by means of an inert gas within the gas-tight housing independently of the pressure outside the gas-tight housing.

12. Aircraft with a supply system according to any one of the preceding claims, further comprising:
a first hydrogen reservoir for providing hydrogen for the first or second reactor (1, 2) and
a second hydrogen reservoir for storing hydrogen produced in the first or second reactor (1,2).

## Revendications

1. Aéronef comprenant un système d'alimentation avec un premier réacteur (1) électrochimique pour la production d'énergie, d'hydrogène, d'oxygène et d'eau claire à partir d'eau grise, un combustible hydrocarburé et de l'air, le premier réacteur électrochimique (1) réalisant au moins en partie au moins l'un des systèmes de l'aéronef, sélectionné parmi le groupe constitué du propulseur auxiliaire pour produire de l'air comprimé et de l'énergie électrique, de la turbine à air dynamique, du réservoir d'eau claire d'un réseau d'eau, du générateur propulseur pour produire de l'énergie électrique et du système d'alimentation en oxygène.

2. Aéronef avec un système d'alimentation suivant la revendication 1, comprenant en outre une unité de commande (9) pour la commande ou la régulation des processus se déroulant dans le réacteur, les processus chimiques ou électrochimiques, qui se déroulent dans le réacteur, se déroulant en tant que processus global et n'étant pas séparables les uns des autres.

3. Aéronef avec un système d'alimentation suivant l'une des revendications 1 et 2, comprenant en outre un second réacteur électrochimique (2), l'unité de commande (9) commandant ou réglant individuellement le premier et le second réacteur (1, 2), de sorte que le premier et le second réacteur (1, 2) peuvent fonctionner indépendamment l'un de l'autre.

4. Aéronef avec un système d'alimentation suivant l'une des revendications précédentes, comprenant en outre : une installation d'utilisation d'eau potable (12), en particulier au moins une installation de lavabos, une chasse d'eau de W.-C, un dispositif de transport de matières fécales ou un dispositif de collecte de matières fécales, l'installation d'utilisation d'eau potable (12) comprenant un dispositif de captation pour le recueil d'eaux usées produites.

5. Aéronef comprenant un système d'alimentation suivant l'une des revendications précédentes, au moins une unité de condensation (15) pour condenser des parts d'eau de gaz d'échappement du premier ou du second réacteur (1, 2) étant montée en aval du premier ou du second réacteur (1, 2).

6. Aéronef comprenant un système d'alimentation suivant la revendication 5, au moins une première unité de traitement pour traiter l'eau claire produite en eau potable ou une seconde unité de traitement pour le traitement d'eaux usées en eau, utilisable pour l'alimentation du premier ou du second réacteur (1, 2), étant montée en aval de l'unité de condensation.

7. Aéronef comprenant un système d'alimentation suivant l'une des revendications précédentes, l'énergie, produite dans le premier ou dans le second réacteur (1, 2), étant disponible au moins en partie en tant qu'énergie électrique, en forme d'une tension continue, sur le premier ou le second réacteur (1, 2).

8. Aéronef avec un système d'alimentation suivant l'une des revendications précédentes, comprenant en outre : au moins une turbine ou au moins une pompe, la au moins une turbine ou pompe (26) étant réalisée pour le transport d'un flux de matière de sortie, émanant du premier ou du second réacteur (1, 2), ou pour le pompage d'un flux de matière d'entrée, envoyé dans le premier ou dans le second réacteur (1, 2).

9. Aéronef avec un système d'alimentation suivant l'une des revendications précédentes, comprenant en outre : au moins un dispositif d'alimentation sélectionné parmi le groupe constitué:
d'un premier dispositif d'alimentation pour le combustible hydrocarburé à envoyer,
d'un deuxième dispositif d'alimentation pour de l'eau claire externe à envoyer, et
d'un troisième dispositif d'alimentation pour de l'énergie électrique à envoyer à partir du réseau de bord ou d'une source d'énergie externe ou d'une pile à combustible fonctionnant séparément.

10. Aéronef avec un système d'alimentation suivant l'une des revendications précédentes, comprenant en outre : une enceinte étanche aux gaz pour tous les composants du système critiques de la sécurité.

11. Aéronef avec un système d'alimentation suivant la revendication 10, comprenant en outre : un dispositif d'équilibrage de température pour régler une température à l'intérieur de l'enceinte étanche aux gaz, et un dispositif de pressurisation pour la mise en pression par un gaz inerte à l'intérieur de l'enceinte étanche aux gaz indépendamment de la pression à l'extérieur de cette dernière.

12. Aéronef avec un système d'alimentation suivant l'une des revendications précédentes, comprenant en outre : un premier réservoir d'hydrogène destiné à fournir de l'hydrogène au premier ou au second réacteur (1 ; 2), et un second réservoir d'hydrogène destiné au stockage de l'hydrogène produit dans le premier ou dans le second réacteur (1, 2).
